# EUROPÄISCHE PATENTANMELDUNG

(11) **EP 2 452 651 A1**
(43) Veröffentlichungstag der Anmeldung: **16.05.2012**
(21) Anmeldenummer: 10191244.2
(22) Anmeldetag: 15.11.2010
(51) Int. Cl.: A61C 13/20, F27B 17/02, F27D 5/00

(54) **Dentalofen mit Suszeptor-Behälter**

(71) Anmelder: Ivoclar Vivadent AG, 9494 Schaan (LI)
(72) Erfinder: Jussel, Rudolf, 6805, Feldkirch-Gisingen (AT)
(74) Vertreter: Splanemann

(57) **Zusammenfassung**

Die Erfindung betrifft einen Ofen, insbesondere einen Dentalofen, mit einer Heizkammer (12), in welchem wärmezubehandelnde insbesondere mehrgliedrige Dentalrestaurationsteile einbringbar sind. Der Dentalofen wird mit einer thermischen Heizung (16), die über Wärmeleitung, Wärmekonvektion und/oder Infrarotstrahlung die Dentalrestaurationsteile (30) erwärmt, so dass die Dentalrestaurationsteile (30) in oder auf einem Suszeptor aus einem hoch-wärmeleitfähigen Material, insbesondere aus Siliziumkarbid, aufgenommen werden.

## Beschreibung

Die Erfindung betrifft einen Dentalofen, insbesondere einen Dentalbrennofen, gemäß dem Oberbegriff von Anspruch 1, sowie ein Verfahren zum Sintern eines Dentalrestaurationsteils gemäß dem Oberbegriff von Anspruch 14.

Derartige Dentalöfen weisen typischerweise eine Widerstandsheizung auf, bei der der Brennraum über Heizwendeln, die im wesentlichen gleichmässig verteilt um einen Brennraum angeordnet sind, auf eine hohe Temperatur erwärmt werden.

Die von den Heizelementen abgegebene Wärmestrahlung wird auf die in dem Brennraum angeordneten Dentalrestaurationsteile übertragen, hauptsächlich durch Wärmestrahlung, Wärmeleitung, aber auch durch Konvektion.

Für die Qualität des fertigen Dentalrestaurationsteils ist es entscheidend, dass die Wärmebehandlung über derartige Brennöfen mit hoher Qualität und einem sehr homogenen und genau vorbestimmten Temperaturregime erfolgt. Dies kann dazu führen, dass für die Bereitstellung mehrgliedriger Dentalrestaurationen im Falle einer Sinterung wie beispielsweise von ZrO₂ eine Sinter-Zykluszeit von drei Stunden bei dreigliedrigen Kronen oder 8 Stunden bei sechsgliedrigen Kronen erforderlich ist.

Der Reduktion der Sinterzeit von weitspannigen d.h. mehrgliedrigen Dentalrestaurationen steht ein erhebliches Risiko eines bleibenden Verzugs oder einer verminderten Qualität durch sich ausbildende Gefügeinhomogenitäten, und damit einhergehende eine Herabsetzung von Materialeigenschaften wie der Festigkeit, entgegen. Dies wird insbesondere durch Temperaturinhomogenitäten, vorgegeben durch die geometrische Ausgestaltung der Heizkammer, die insbesondere durch schnelle Aufheizzyklen zunehmen, verursacht.

Es sind nun verschiedene Versuche unternommen worden, um die Zykluszeit deutlich zu vermindern, nachdem sie im Arbeitsablauf eines Dentallabors für den Durchsatz entscheidend ist. Durch spezielle Temperaturprofile und ein angepasstes Design des Arbeitsraumes des Dentalbrennofens sowie genau vorgegebene Anordnungsvorschriften der Dentalrestaurationsteile in dem Brennraum ist es gelungen, die Zykluszeit für die Verarbeitung von mehrgliedrigen Dentalrestaurationen von acht Stunden auf drei Stunden zu reduzieren, wobei wiederum spezielle Öfen eingesetzt werden müssen, was für das betreffende Dentallabor durchaus hohe Kosten von EUR 10.000,00 verursachen kann.

Es sind bereits darüber hinaus weitere zahlreiche Vorschläge vorgebracht worden, über die Verwendung sogenannter Brennhilfsmittel die Aufheiz- und Abkühlkurve der Dentalrestaurationsteile, meist jedoch der von eingliedrigen Dentalrestaurationsteilen zu verbessern. So ist es aus der DE 10 2008 015 483 bekannt geworden, ein Kugelbett als Brennhilfsmittel zu verwenden, wobei speziell die Temperaturerfassung verbessert werden kann.

Die Brennhilfsmittel erlauben unter Umständen eine gewisse Verbesserung der Vergleichmäßigung der Temperatur im Brennraum, was der Qualität der Dentalrestaurationsteile zugute kommt, gerade auch bei mehrgliedrigen Brücken. Sie haben jedoch eine erhebliche Wärmekapazität, so dass die Aufheizung und Abkühlung länger dauert, was im Grunde dem Bestreben der Fachleute nach Reduktion der Zykluszeit zuwiderläuft.

Insbesondere beim Versuch einer Verkürzung der Prozesszeit können sich je nach Art des Brennmittels die Temperaturgradienten auch noch erhöhen, insbesondere dann, wenn diese Brennhilfsmittel eine temperaturisolierende Wirkung haben.

Um wenigstens für kleine, beispielsweise eingliedrige Dentalrestaurationsteile eine geringe Zykluszeit zu erzielen, ist es auch vorgeschlagen worden, Brennöfen in unterschiedlichen Größen auszulegen, so dass ein Dentallabor bei einem Brennofen mit einem ausgesprochen kleinen und kompakten Brennraum und einem weiteren mit einem großdimensionierten Brennraum verfügt.

Diese Lösung erlaubt zumindest für kleine, also ein- oder zweigliedrige Dentalrestaurationsteile eine signifikant reduzierte Zykluszeit bei gutem Qualitätsergebnis. Sie ist jedoch ausgesprochen teuer, sodass sie sich in der Praxis nicht durchgesetzt hat.

Demgegenüber liegt der Erfindung die Aufgabe zugrunde, einen Brennofen gemäß dem Oberbegriff von Anspruch 1 sowie ein Verfahren gemäß dem Oberbegriff von Anspruch 14 zu schaffen, der bzw. das trotz eines minimalen Zusatzaufwandes hinsichtlich des Brennergebnisses, insbesondere hinsichtlich der Zykluszeit, wesentlich verbessert ist.

Dieser Aufgabe wird erfindungsgemäß durch Anspruch 1 bis 14 gelöst. Vorteilhafte Weiterbildungen ergeben sich aus den Unteransprüchen.

Überraschend ergibt sich mit der erfindungsgemäßen Hinzufügung des Suszeptors eine starke Reduktion der Dauer des Brennzyklus, beispielsweise von fünf Stunden auf neunzig Minuten bei sechsgliedrigen Dentalrestaurationsteilen. Dies ist vor allen Dingen deswegen überraschend, weil ein Suszeptor aus einem hoch-wärmeleitfähigen Material, insbesondere aus Siliciumkarbid, zusätzlich in dem Brennraum aufgenommen ist. Der Effekt, dass hier durch eine Vergleichmäßigung der Innenraumtemperatur in dem hoch-wärmeleitfähigen Behälter, der die Wärme sehr gut aufnimmt und an das Dentalrestaurationsteil wieder abgibt, dadurch also insofern als Suszeptor betrachtet werden kann, die Zykluszeit dennoch sinkt.

Überraschend verteilt sich die Wärme in dem Dentalrestaurationsteil wesentlich besser und schneller, aufgrund der großen wärmeaufnehmenden Flächen des hoch-wärmeleitfähigen Behälters im Vergleich zum Dentalrestaurationsteil. Durch Anlage oder zumindest enge Nachbarschaft des Dentalrestaurationsteils in oder an oder auf dem Behälter lässt sich die Wärmeübertragung so großflächig sicherstellen, und es entsteht in dem Behälterinnenraum eine sehr gleichmäßige Temperaturverteilung, die jedenfalls um eine Größenordnung gleichmäßiger als die Temperaturverteilung in dem Brennraum eines handelsüblichen Dentalbrennofens ist.

Erfindungsgemäß besonders günstig ist es, dass die geringe Zykluszeit auch bei temperaturzubehandelnden dentalen Restaurationsteilen mit sehr schlechter Eigenwärmeleitfähigkeit darstellbar ist, wie dies beispielsweise bei ZrO₂ mit lediglich 2 W/mK der Fall ist.

Insgesamt ist man auch nicht mehr so sehr auf die gegebenenfalls schlechte Eigenwärmeleitfähigkeit der zu wärmebehandelnden Keramik angewiesen, da nun aufgrund der schnellen Wärmeübertragung im Behälter die Temperatur quasi an mehreren Stellen gleichzeitig und sehr gleichmässig eingespeist wird. Bei höheren Temperaturen, bei welchen der eigentliche Sinterprozess einsetzt, kommt hinzu, dass die Wärmestrahlung als dominanter Effekt eintritt. Bei Einsatz eines Suszeptorbehältermaterials wie beispielsweise SiC mit einem hohen Emissionsgrad ist nicht nur die Wärmeaufnahme von einer heisseren Temperaturquelle besser, sondern auch die Wärmeabgabe an eine kältere Stelle, nämlich erfindungsgemäß an die dentalen Restaurationen oder kälteren Flächen im Suszeptorinneren, welche die Temperaturen darüber hinaus nochmals durch die hohe eigene Wärmeleitung sehr rasch vergleichmässigen.

Erfindungsgemäß ist es besonders günstig, wenn der Suszeptor-Behälter eine Wandstärke von etwa 2 mm aufweist und aus einem Material mit einer Wärmeleitfähigkeit von mehr als 100 W/mK besteht. Trotz der geringen Wandstärke lässt sich die Wärme in dem Behälter dann gut verteilen, und eine geringe Wandstärke bedingt auch eine geringe zusätzliche Masse, die aufgeheizt werden muss. Es versteht sich, dass das Verhältnis von zusätzlicher Wärmekapazität der gewünschten Temperaturvergleichmäßigung durch geeignete Material- und Wandstärkenwahl in weiteren Bereichen an die Erfordernisse anpassbar ist. So kann beispielsweise auch die Bodenwand des Behälters etwas stärker als die Seitenwand ausgebildet sein, beispielsweise 2,5 mm gegen 1,5 mm, um jedenfalls flächig eine gute Wärmeverteilung zu erzielen.

Die Anpassung kann auch aus konstruktiven Überlegungen notwendig sein, da das bevorzugte Material für den Behälter keramikgerecht konstruiert werden muss.

Das Dentalrestaurationsteil liegt bevorzugt flach in dem Behälter auf und erstreckt sich im wesentlichen über den Innenraum des Behälters, beispielsweise über 80 mm. Insofern nimmt dann auch der Behälter einen Großteil der Fläche des Brennraums ein, wobei es bevorzugt ist, den Behälter zentral anzuordnen, so dass nach allen Seiten hin ein gleichmäßiger Abstand zur Wand des Brennraums bzw. insbesondere zu den Heizelementen besteht.

Bevorzugt wird der Brennofen so betrieben, dass zunächst das Dentarestaurationsteil in den Behälter eingebracht wird. Es wird sorgfältig dort aufgelegt, so dass es guten Kontakt mit der Bodenwand des Behälters hat. Dann wird der Deckel des Behälters geschlossen und der Behälter exakt zentral in den Dentalbrennofen beziehungsweise in dessen Brennraum eingebracht. Hierzu können entsprechende Führungen oder Einlassungen im Dentalofen angebracht sein, um eine eindeutige Positionierung und Aufnahme des Behälters sicher zu stellen. Nach Schließen der Brennofenhaube oder der Brennofentüre wird dann in Abstimmung mit der optimalen Sinterrate des Materials abschnittsweise die maximal mögliche Aufheizrate gewählt, beispielsweise bis hin zu 400 °C/min, um den Wärmebehandlungsprozess mit maximaler Geschwindigkeit durchführen zu können.

Es versteht sich, dass es in beliebiger geeigneter Weise auch möglich ist, über an sich bekannte Vorwärmöfen beispielsweise bei 700 °C eine Vorerwärmung der Dentalrestaurationsteile zu erzielen. In diesem Fall wird bevorzugt das Dentalrestaurationsteil zusammen mit dem Behälter von dem Vorwärmofen in den Brennofen überführt, wobei vorsorglich überprüft wird, dass nicht durch den Transport eine ungewünschte Verlagerung der Dentalrestaurationsteile in dem Behälter entstanden ist.

Erfindungsgemäß besonders günstig ist es, wenn der Behälter flachzylindrisch ausgebildet ist und eine Höhe von beispielsweise etwa einem Fünftel seines Durchmessers aufweist. Hierdurch entsteht eine besonders gute Wärmeübertragung, gerade auch vom Deckel des Behälters zum Dentalrestaurationsteil.

Erfindungsgemäß ferner besonders günstig ist es, dass das Material des Behälters einen sehr geringen Wärmewiderstand beziehungsweise umgekehrt eine sehr gute Wärmeleitfähigkeit aufweist. Eine Wärmeleitfähigkeit von mindestens 100 W/mK ist bevorzugt, noch stärker bevorzugt ist eine Wärmeleitfähigkeit von 200 W/mK. Derartige Behälter lassen sich aus speziellen Keramiken wie Siliciumkarbid herstellen, wobei auch Behälter aus Molybdän eingesetzt werden können, welche ebenfalls eine sehr hohe Wärmeleitfähigkeit von 139W/mK besitzen. Für den Fall oxidierender Atmosphären kann das Molybdän auch beschichtet ausgeführt sein. Mit Einschränkungen bezüglich max. Einsatztemperatur auf max. 1500°C ist auch ein Einsatz von Aluminiumnitrid AIN mit einer Wärmeleitfähigkeit von 180W/mK denkbar.

Erfindungsgemäß besonders günstig ist es auch, dass ähnliche Behälter in der Lebensmittelindustrie als Suszeptoren verwendet werden und so recht preisgünstig beschafft werden können.

Ein weiterer besonders günstiger Vorteil der Erfindung liegt darin begründet, dass ein klassischer Brennofen praktisch mit den erfindungsgemäßen Behältern nachrüstbar ist und so die Möglichkeit besteht, die bereits vorhandenen und daher keinen zusätzlichen Beschaffungsaufwand erfordernden Dentalöfen erfindungsgemäß auszustatten. Es muss lediglich der Dentalofen für schnelle Heizraten ohne Einbussen an seine Lebensdauer und Funktion ausgelegt sein.

Erfindungsgemäß besonders günstig ist es auch, dass der erfindungsgemäße Behälter auch besonders gut für die Vorbereitung und den Transfer des Brennguts eignet. Hierzu müssen lediglich die zu brennenden Dentalrestaurationsteile in einem Behälter angeordnet und sorgfältig ausgerichtet werden, so dass sie einen möglichst guten Kontakt aufweisen. Dieser Behälter wird dann in einen Vorwärmofen eingebracht und dort beispielsweise eine Stunde auf eine Temperatur auf etwa 700 °C vorgewärmt. Während des Vorwärmens kann in einem weiteren Behälter ein Brennzyklus anderer Dentalrestaurationsteile in dem eigentlichen Dentalofen vorgenommen werden, und nachdem dieser Brennzyklus abgeschlossen ist, werden kurzerhand die Behälter getauscht, oder der Behälter mit den fertig gebrannten Dentalrestaurationsteilen wird aus dem Brennofen entfernt und anstelle dessen der Behälter mit den vorgewärmten Dentalrestaurationsteilen eingebracht.

Das Einbringen erfolgt zentral, wobei es auch möglich ist, im Brennraumboden entsprechende Markierungen oder sogar Anschläge vorzusehen, die die zentrale Einbringung des Behälters erleichtern.

Selbstverständlich können an dem Behälter konstruktive Elemente für ein sicheres Handling und einen sicheren Transport durch die menschliche Hand, falls der Behälter kalt ist, als auch für das sichere Handling mit einer Zange oder einem Heber oder ähnlichem angebracht oder eingelassen sein.

Innerhalb des Behälters können weitere Markierungen, in einer Art Koordinaten, hilfreich für die Zuordnung der Dentalteile zu konkreten Aufträgen, angebracht sein.

In einer vorteilhaften Ausgestaltung ist es vorgesehen, den Behälter mit Ausnehmungen oder Poren zu versehen, deren Größe bevorzugt geringer als die halbe Größe eines Zahnes ist. Hierdurch läßt sich die Wärmekapazität des Behälters weiter vermindern, während die Temperaturvergleichmäßigungswirkung im wesentlichen aufrechterhalten bleibt.

In weiterer vorteilhafter Ausgestaltung des erfindungsgemäßen Brennofens ist es vorgesehen, mehrere Behälter gestapelt oder zumindest aufeinandergesetzt gemeinsam zu brennen. Beispielsweise können ohne weiteres zwei Behälter aus Siliciumkarbid über je drei Siliciumkarbid-Stützen aufeinander abgestützt sein und die Dentalrestaurationsteile in beliebiger geeigneter Form aufnehmen. Die erfindungsgemäße Temperaturvergleichmäßigung wird hierdurch nicht beeinträchtigt, wobei es sich versteht, dass sichergestellt sein muss, dass der Behälterstapel nicht durch Schließen der Ofenhaube erschüttert wird oder gar beschädigt wird.

In diesem Zusammenhang ist der erfindungsgemäß vorgesehene gleichmäßige Abstand zur Brennraumwand besonders günstig: er verhindert eine Kollission zwischen der Haube und dem Behälter, gerade dann, wenn die Ofenhaube nach oben geschwenkt und nicht nach oben gehoben wird.

Erfindungsgemäß besonders günstig ist es auch, dass der Behälter aus hoch-wärmeleitfähigem Material als geschlossener Behälter ausgebildet ist. Verunreinigungen aus dem Dentalofen können so nicht auf die dentalen Restaurationsteile einwirken. Dies sind beispielsweise im Falle von dentalen Restaurationsteilen aus ZrO₂ Verunreinigungen aus Sinteröfen mit MoSi Heizelementen, welche Aufgrund der Betriebsdauer oder Art eine fehlende Schutzschicht haben. Diese fehlende Schutzschichten können ohne die Erfindung zeitweise zu gelb - grünen Verfärbungen der dentalen Restaurationsteile führen.

Aufgrund der eigenen hohen Wärmeleitfähigkeit ist der Suszeptorbehälter unter Berücksichtigung eines günstigen Designs selbst sehr resistent gegen Temperaturschockbelastungen und sehr bruchsicher. Im Falle von SIC kommt noch eine sehr hohe Härte hinzu, was den Behälter sehr robust und langlebig macht. Damit einher geht auch eine leichte Reinigung des Behälters. Beispielsweise können Verunreinigungen, wie diese bei dentalen Verarbeitungsprozessen, wie z.B. der Verarbeitung von Lithiumdisilikatkeramiken und dazu notwendigen entsprechende Zusatzstoffen zurückbleiben, nach Bedarf und von Zeit zu Zeit beispielsweise durch Sandstrahlen leicht und schnell entfernt werden.

Dadurch ist der erfindungsgemäße Behälter natürlich sehr lange wieder verwendbar. Durch die Möglichkeit einer leichten Reinigung ist der gleiche Behälter aber auch für unterschiedliche Prozesse, nämlich beispielsweise der Sinterung von ZrO₂ und der Wärmebehandlung von Lithiumdisilikatkeramiken und anders sehr variabel einsetzbar.

Gemäß einem weiteren, besonders bevorzugten Gesichtspunkt der Erfindung nimmt der Behälter den Bodenraum des Brennraums ein und ist über einen Deckel geschlossen. Alternativ kann er auch über eine Haube geschlossen sein. In beiden Fällen erfolgt die Erwärmung des hoch-wärmeleitfähigen Behälters und damit indirekt der darin befindlichen Dentalrestaurationsteile über eine Kombination von Wärmestrahlung, Wärmeleitung und Konvektion. Durch die an den Heizelementen aufsteigende Luft oder in einem Ofen angebrachte Luftzuführungen und Abführungen entstehen in dem Brennraum Konvektionsluftwalzen, die gegebenenfalls die Temperaturinhomogenitäten in einem Brennraum vergrössern.

Dies kann in Folge zu variablen und unbefriedigenden Restaurationsergebnissen führen.

Durch die Abschirmung der Dentalrestaurationsteile von solchen Konvenktionsluftwalzen über den Suszeptorbehälter wird dies sicher verhindert, und die Erwärmung der
Dentalrestaurationsteile erfolgt indirekt über den sich auf einem gleichmäßgien Temperaturniveau befindlichen Behälter. Da das Temperaturniveau innerhalb des Behälters gleich ist, entsteht innerhalb des Behälters auch keine Konvektion, und die aussen entstehende Konvektion stört die Temperaturvergleichmäßigung auch nicht, im Hinblick auf die hohe Wärmeleitfähigkeit des Behälters.

In vorteilhafter Ausgestaltung ist es vorgesehen, dass das Dentalrestaurationsteil über eine Stützstruktur abgestützt ist. Eine derartige Stützstruktur kann beispielsweise über Stützstreben realisiert sein, die sich quer zwischen den Molaren einer beispielsweise zehngliedrigen Brücke erstrecken, und auch in Incisal-Richtung eine zusätzliche Abstützung vornehmen, oder aber durch Realisierung einer scheibenförmigen Stützstruktur, die auch mehrere mehrgliedrige Dentalrestaurationsteile aufnehmen kann, die je über Stützstege seitlich abgestützt sind.

Die scheibenförmige Stützstruktur kann bei dieser Ausführungsform dann in dem Behälter verbleiben und es ist möglich, die dentalen Restaurationsteile erst nach der Wärmebehandlung durch Durchtrennen der Stützstege zu entfernen. Hierdurch ergibt sich die Möglichkeit, die dentalen Restaurationsteile während der Wärmebehandlung optimal zu lagern und eine verzugsfreie Sinterung zu erleichtern.

Nachdem der Behälter die Konvektionswärme aufnimmt und in Strahlungswärme umwandelt ist es gerechtfertigt, ihn als Suszeptor anzusehen.

Besonders vorteilhaft ist es, dass die Dentalrestaurationsteile in oder auf einem Suszeptor-Behälter aus einem hoch-wärmeleitfähigen Material, insbesondere mit einer Wärmeleitfähigkeit von mehr als 100W/mK, bevorzugt etwa 200 W/mK, aufgenommen sind. Besonders vorteilhaft ist es, dass der Suszeptor-Behälter eine Wandstärke von 1 bis 5 mm, insbesondere von 1,5 bis 2,5 mm und bevorzugt von etwa 2 mm aufweist.

Besonders vorteilhaft ist es, dass der Suszeptor aus einem gesinterten Keramikmaterial besteht, das temperaturbeständig mindestens bis 1650 °C, bevorzugt bis 1900°C ist, und insbesondere aus Siliziumkarbid besteht und eine Wärmeleitfähigkeit von 120 Watt/mK aufweist.

Besonders vorteilhaft ist es, dass das Dentalrestaurationsteil als mehrgliedrige Einheit ausgebildet ist und 4, 6 oder bis zu 14 Einheiten umfasst, wobei 14 Einheiten einen kompletten Zahnbogen bilden.

Besonders vorteilhaft ist es, dass eine Stützstruktur der Dentalrestaurationsteile mindestens 2 Bereiche der Dentalrestaurationsteile abstützt, insbesondere über Stützstege, wobei insbesondere mindestens 2 Dentalrestaurationsteile in einer Stützscheibe aufgenommen und über Stege mit dieser verbunden sind.

Besonders vorteilhaft ist es, dass der Emmissionskoeffizient des Suszeptors größer als 0,8, insbesondere etwa 0,9 ist.

Besonders vorteilhaft ist es, dass der Suszeptor als Behälter ausgebildet ist, der eine Bodenwand aufweist, auf welcher die Dentalrestaurationsteile aufliegen, sowie Seitenwände, die die Dentalrestaurationsteile umgeben und/oder der Suszeptor die Dentalrestaurationsteile topf- oder napfförmig umgibt und insbesondere einen Deckel aufweist.

Besonders vorteilhaft ist es, dass der Suszeptor die Dentalrestaurationsteile abstützt und dass die Dentalrestaurationsteile insbesondere flach und gleichmässig verteilt auf dem Suszeptor aufliegen und/oder dass die Dentalrestaurationsteile in Mehrpunktauflage auf dem Suszeptor aufliegen.

Besonders vorteilhaft ist es, dass der Brennofen mindestens abschnittsweise einen Aufheizgradienten von mehr als 80 K/min, insbesondere etwa 400 K/min aufweist und dass sowohl das Aufheizen als auch das Brennen oder Sintern als auch das Abkühlen der Dentalrestaurationsteile in oder auf dem Suszeptor erfolgt.

Besonders vorteilhaft ist es, dass der Suszeptor als geschlossener Behälter ausgebildet ist, der in dem Brennraum zentral aufgenommen ist, insbesondere gleichmäßig beabstandet von den Wänden des Brennraums und/oder Heizelemente, wobei insbesondere der Suszeptor den Boden des Brennraums zu mehr als der Hälfte bedeckt und dass zwischen dem Suszeptor und den Heizelementen ein Abstand von je stets mehr als 1 cm belassen ist.

Besonders vorteilhaft ist es, dass der Behälter, der den Suszeptor bildet, eine Höhe aufweist, die um weniges mehr als die maximale Höhe eines Dentalrestaurationsteils trägt und dass das größte zu brennende Dentalrestaurationsteil sich im wesentlichen vollständig und beliebig orientiert durch den Innenraum des Suszeptors erstreckt.

Besonders vorteilhaft ist es, dass der Behälter als geschlossener Behälter ausgebildet ist und den Brennraum in einen Suszeptor-Innenraum und einen Suszeptor-Aussenraum aufteilt, wobei das oder die zu brennenden Dentalrestaurationsteile vollständig in den Suszeptor-Innenraum aufgenommen sind.

Besonders vorteilhaft ist es, dass der Behälter als geschlossener Suszeptor-Behälter für das Einbringen in einen konventionellen Dentalbrennofen bestimmt ist und aus einem hoch-temperaturleitfähigem Material wie Siliciumkarbid besteht und eine Wandstärke von weniger als 5 mm, bevorzugt etwa 2 mm, aufweist.

Besonders vorteilhaft ist es, dass das Dentalrestaurationsteil mit einer Erstreckung von 80 mm oder mehr innerhalb des Brennraums in einen Suszeptor, insbesondere aus Siliziumkarbid, eingelegt wird und die Wärmebehandlung des dentalen Restaurationsteils im Dentalofen in einer Zeit kleiner als 100 Min erfolgt.

Besonders vorteilhaft ist es, dass das Dentalrestaurationsteil oder die Dentalrestaurationsteile in den Suszeptor bei Raumtemperatur weniger als 50°C oder der Temperatur eines Vorwärmofens eingelegt werden, und der Suszeptor während des Wärmebehandlungszyklus geschlossen verbleibt.

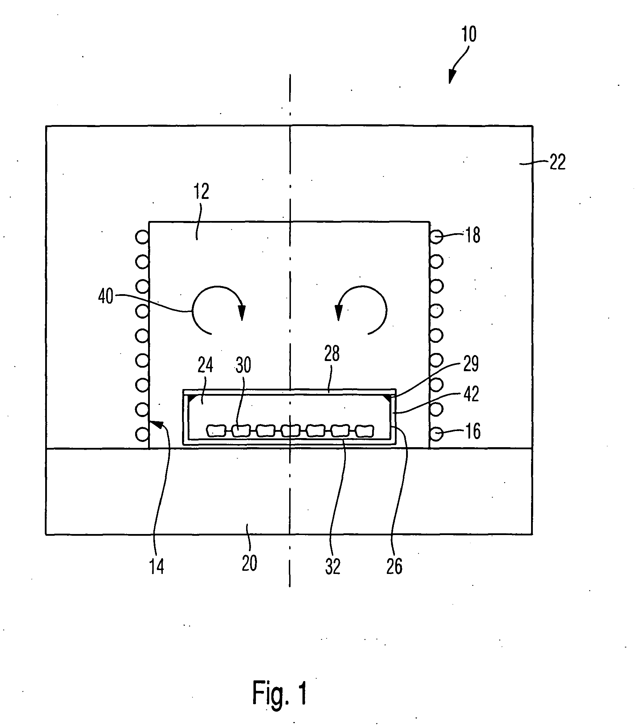

Weitere Vorteile, Einzelheiten und Merkmale ergeben sich aus der nachfolgenden Beschreibung eines Ausführungsbeispiels der Erfindung anhand der Zeichnung. Es zeigt:
Die einzige Figur der Zeichnung eine schematische Ansicht eines erfindungsgemäßen Dentalbrennofens.

Der in der Fig. dargestellte Dentalbrennofen 10 weist einen Brennraum 12 auf, der zylindrisch ausgebildet ist und an seiner Brennraumwand 14 eine Heizung 16 aufnimmt. Die Heizung kann entweder aus einer umlaufenden Heizwendel 18 wie in der Fig. dargestellt ist, bestehen oder aus vertikal verlaufenden Heizstäben. In an sich bekannter Weise ist der Brennofen 10 aus einer Ofenbasis 20 und einer Brennofen-Haube 22 ausgebildet, wobei die Haube 22 nach oben wegschwenkbar ist, um das Brenngut freizulegen. Erfindungsgemäß ist ein Dentalrestaurationsteil oder eine Mehrfachanordnung von Dentalrestaurationsteilen in dem Brennraum 12 aufgenommen. In erfindungsgemäß besonderer Weise erfolgt die Aufnahme jedoch nicht direkt, sondern indirekt über einen Behälter 24, der aus Suszeptor-Material besteht, beispielsweise aus Siliciumkarbid, und hoch-wärmeleitfähig ist. Bevorzugt beträgt die Wärmeleitfähigkeit des Behältermaterials etwa 100 bis 180 W/mK, also etwa 140 W/mK.

Der Behälter 24 ist als Flachzylinder ausgebildet und weist im Beispielsfalle einen Behälternapf 26 und einen Behälterdeckel 28 auf. Der Behälterdeckel 28 ist in an sich bekannter Weise über Formschlusselemente 30 an den Behälternapf 26 gelagert, so dass der Behälter 24 insgesamt einen geschlossenen Behälter darstellt.

In dem Behälter 24 sind Dentalrestaurationsteile 30 aufgenommen, wobei in dem Ausführungsbeispiel eine siebengliedrige Krone schematisch dargestellt ist. Das Dentalrestaurationsteil füllt zwar den Behälter 24 nicht aus, erstreckt sich jedoch quer durch den Behälter, so dass seine Längserstreckung nicht wesentlich geringer als der Innendurchmesser des Behälters 24 ist.

Es versteht sich, dass bei kleineren Dentalrestaurationsteilen 30 auch mehrere Dentalrestaurationsteile nebeneinander angeordnet sein können, oder dass auch kleinere Behälter 24 eingesetzt werden können, gegebenenfalls auch mehrere Behälter, die entweder nebeneinander oder übereinander angeordnet sind.

Auch wenn in dem dargestellten Ausführungsbeispiel der Behälter 24 unmittelbar auf der Ofenbasis 20 aufliegt, ist es in einem modifizierten Ausführungsbeispiel vorgesehen, den Behälter mit Füßen zu versehen oder auf Klötzchen aufzusetzen, so dass der Boden 32 des Behälters von der Ofenbasis 20 beabstandet ist. Bei dieser Ausführungsform ist die Wärmeübertragung von der Heizung 16 auf den Behälter 24 noch verbessert.

Wie in der Figur dargestellt ist, entsteht durch die Erwärmung der Heizung 16 eine ringförmige Konvektionswalze 40, die insbesondere den Deckel, teilweise aber auch Seitenwände 42 des Behälters beaufschlagt. Hierdurch und durch die direkte Wärmestrahlung der Heizung 16 wird der Behälter 24 rasch aufgewärmt, insbesondere wenn, wie es erfindungsgemäß vorgesehen ist, ein großer Aufheiz-Temperaturgradient verwendet wird. Dennoch führt dies nicht zur Einleitung von Temperaturspitzen, denn durch die indirekte Beheizung der Dentalrestaurationsteile 30 in dem Behälter 24 werden von aussen induzierte Temperaturspitzen abgebaut und sind in dem Behälter 24 nicht mehr vorhanden.

Erfindungsgemäß ist es günstig, wenn die Dicke der Behälterwände nicht größer als beispielsweise 5 mm ist. Für den Behälterboden 32 kann beispielsweise eine Wandstärke von 2,5 mm und für die Behälterwand 42 eine Wandstärke von 1,5 mm eingesetzt werden, und für den Deckel eine Wandstärke von 2 mm. Ein derartiger Behälter ist ausreichend sicher handhabbar und weist eine so geringe Wärmekapazität auf, dass die hierdurch erzeugten Nachteile durch die Temperaturvergleichmäßigung gepaart mit dem hohen Aufheiz- und Abkühltemperaturgradienten überkompensiert werden.

Mit dem erfindungsgemäßen Brennofen 10 war mit einer sechsgliedrigen Krone eine Zykluszeit von 90 Minuten darstellbar, während der gleiche, behälterfreie Ofen eine Zykluszeit von 5 Stunden erforderte.

## Patentansprüche

1. Ofen, insbesondere Dentalofen, mit einer Heizkammer, in welche wärmezubehandelnde, insbesondere mehrgliedrige Dentalrestaurationsteile einbringbar sind, mit einer thermischen Heizung, die über Wärmeleitung und/oder Konvektion und/oder Infrarotstrahlung die Dentalrestaurationsteile erwärmt, **dadurch gekennzeichnet, dass** die Dentalrestaurationsteile (30) in oder auf einem Suszeptor-Behälter (24) aus einem hoch-wärmeleitfähigen Material, insbesondere mit einer Wärmeleitfähigkeit von mehr als 100W/mK, bevorzugt etwa 200 W/mK, aufgenommen sind.

2. Ofen nach Anspruch 1, **dadurch gekennzeichnet, dass** der Suszeptor-Behälter (24) eine Wandstärke von 1 bis 5 mm, insbesondere von 1,5 bis 2,5 mm und bevorzugt von etwa 2 mm aufweist.

3. Ofen nach einem der vorhergehenden Ansprüche, **dadurch gekennzeichnet, dass** der Suszeptor (24) aus einem gesinterten Keramikmaterial besteht, das temperaturbeständig mindestens bis 1650 °C, bevorzugt bis 1900°C ist, und insbesondere aus Siliziumkarbid besteht und eine Wärmeleitfähigkeit von 120 Watt/mK aufweist.

4. Ofen nach einem der vorhergehenden Ansprüche, **dadurch gekennzeichnet, dass** das Dentalrestaurationsteil (30) als mehrgliedrige Einheit ausgebildet ist und 4 bis 14 Einheiten umfasst, wobei 14 Einheiten einen kompletten Zahnbogen bilden.

5. Ofen nach einem der vorhergehenden Ansprüche, **dadurch gekennzeichnet, dass** eine Stützstruktur der Dentalrestaurationsteile mindestens 2 Bereiche der Dentalrestaurationsteile abstützt, insbesondere über Stützstege, wobei insbesondere mindestens 2 Dentalrestaurationsteile in einer Stützscheibe aufgenommen und über Stege mit dieser verbunden sind.

6. Ofen nach einem der vorhergehenden Ansprüche, **dadurch gekennzeichnet, dass** der Emmissionskoeffizient des Suszeptors größer als 0,8, insbesondere etwa 0,9 ist.

7. Ofen nach einem der vorhergehenden Ansprüche, **dadurch gekennzeichnet, dass** der Suszeptor als Behälter (24) ausgebildet ist, der eine Bodenwand (32) aufweist, auf welcher die Dentalrestaurationsteile (30) aufliegen, sowie Seitenwände (14), die die Dentalrestaurationsteile (30) umgeben und/oder der Suszeptor die Dentalrestaurationsteile (30) topf- oder napfförmig umgibt und insbesondere einen Deckel (28) aufweist.

8. Dentalofen nach einem der vorhergehenden Ansprüche, **dadurch gekennzeichnet, dass** der Suszeptor die Dentalrestaurationsteile (30) abstützt und dass die Dentalrestaurationsteile (30) insbesondere flach und gleichmässig verteilt auf dem Suszeptor aufliegen und/oder dass die Dentalrestaurationsteile (30) in Mehrpunktauflage auf dem Suszeptor aufliegen.

9. Ofen nach einem der vorhergehenden Ansprüche, **dadurch gekennzeichnet, dass** der Brennofen (10) mindestens abschnittsweise einen Aufheizgradienten von mehr als 80 K/min, insbesondere etwa 400 K/min aufweist und dass sowohl das Aufheizen als auch das Brennen oder Sintern als auch das Abkühlen der Dentalrestaurationsteile (30) in oder auf dem Suszeptor erfolgt.

10. Brennofen nach einem der vorhergehenden Ansprüche, **dadurch gekennzeichnet, dass** der Suszeptor als geschlossener Behälter (24) ausgebildet ist, der in dem Brennraum (12) zentral aufgenommen ist, insbesondere gleichmäßig beabstandet von den Wänden des Brennraums (12) und/oder Heizelemente, wobei insbesondere der Suszeptor den Boden (32) des Brennraums (12) zu mehr als der Hälfte bedeckt und dass zwischen dem Suszeptor und den Heizelementen (18) ein Abstand von je stets mehr als 1 cm belassen ist.

11. Ofen nach einem der vorhergehenden Ansprüche, **dadurch gekennzeichnet, dass** der Behälter (24), der den Suszeptor bildet, eine Höhe aufweist, die um weniges mehr als die maximale Höhe eines Dentalrestaurationsteils (30) trägt und dass das größte zu brennende Dentalrestaurationsteil (30) sich im wesentlichen vollständig und beliebig orientiert durch den Innenraum des Suszeptors erstreckt.

12. Ofen nach einem der vorhergehenden Ansprüche, **dadurch gekennzeichnet, dass** der Behälter (24) als geschlossener Behälter (24) ausgebildet ist und den Brennraum (12) in einen Suszeptor-Innenraum und einen Suszeptor-Aussenraum aufteilt, wobei das oder die zu brennenden Dentalrestaurationsteile (30) vollständig in den Suszeptor-Innenraum aufgenommen sind.

13. Behälter für Dentalrestaurationsteile, mit einem flachen Behälterboden und einer umlaufenden Seitenwand sowie einem Deckel oder einer Haube des Behälters, über welche der Behälter verschließbar ist, **dadurch gekennzeichnet, dass** der Behälter (24) als geschlossener Suszeptor-Behälter (24) für das Einbringen in einen konventionellen Dentalbrennofen (10) bestimmt ist und aus einem hoch-temperaturleitfähigem Material wie Siliciumkarbid besteht und eine Wandstärke von weniger als 5 mm, bevorzugt etwa 2 mm, aufweist.

14. Verfahren zum Sintern eines Dentalrestaurationsteils, insbesondere aus einer Dentalkeramik, insbesondere Zirkondioxid (ZrO₂) unter Verwendung eines Brennofens, der eine thermische Heizung aufweist, wobei das Dentalrestaurationsteil zum Sintern in den Brennraum des Dentalofens eingebracht wird, **dadurch gekennzeichnet, dass** das Dentalrestaurationsteil mit einer Erstreckung von 80 mm oder mehr innerhalb des Brennraums in einen Suszeptor, insbesondere aus Siliziumkarbid, eingelegt wird und die Wärmebehandlung des dentalen Restaurationsteils im Dentalofen in einer Zeit kleiner als 100 Min erfolgt.

15. Verfahren nach Anspruch 14, **dadurch gekennzeichnet, dass** das Dentalrestaurationsteil oder die Dentalrestaurationsteile in den Suszeptor bei Raumtemperatur weniger als 50°C oder der Temperatur eines Vorwärmofens eingelegt werden, und der Suszeptor während des Wärmebehandlungszyklus geschlossen verbleibt.
